# EUROPÄISCHE PATENTSCHRIFT

(11) **EP 1 877 682 B1**
(45) Veröffentlichungstag und Bekanntmachung des Hinweises auf die Patenterteilung: **18.03.2009**
(21) Anmeldenummer: 06723564.8
(22) Anmeldetag: 21.03.2006
(51) Int. Cl.: F16H 7/08, F16H 7/18

(54) **SPANNVORRICHTUNG EINES ZUGMITTELTRIEBES**
TENSIONING DEVICE PERTAINING TO A TRACTION MECHANISM DRIVE
DISPOSITIF TENDEUR D'UNE TRANSMISSION PAR ELEMENT FLEXIBLE

(30) Priorität: 28.04.2005 DE 102005019694
(43) Veröffentlichungstag der Anmeldung: 16.01.2008
(73) Patentinhaber: Schaeffler KG, 91074 Herzogenaurach (DE)
(72) Erfinder: ULLEIN, Thomas, 96158 Frensdorf (DE); KOCH, Reinhard, 96163 Wachenroth (DE)
(86) Internationale Anmeldenummer: PCT/EP2006/002549
(87) Internationale Veröffentlichungsnummer: WO 2006/114168

(56) Entgegenhaltungen:
- EP-A- 0 483 564
- DE-A1- 4 041 785
- US-A- 5 782 625

## Beschreibung

### Gebiet der Erfindung

Die Erfindung betrifft eine Spannvorrichtung eines Zugmitteltriebes, mit einem axialbeweglich gelagerten Spannkolben, der mit einem dem Zugmittel zugewandten Befestigungsschaft versehen ist, mit einem mit einer Lagerbohrung auf dem Befestigungsschaft montierten Spannschuh aus Kunststoff, und mit einem mit einer Lagerbohrung auf dem Befestigungsschaft befestigten scheibenförmigen metallischen Stützelement, entsprechend dem Oberbegriff des Anspruchs 1 und wie sie aus der EP 0483564 A bekannt ist.

### Hintergrund der Erfindung

Zugmitteltriebe, wie Kettentriebe und Zahnriementriebe, werden wegen ihrer Zuverlässigkeit und Wirtschaftlichkeit in vielen Maschinen zur Leistungsübertragung verwendet, so z. B. auch zum Antrieb von Nockenwellen an Verbrennungskolbenmotoren von Kraftfahrzeugen. Zur Vermeidung von Schwingungen des Zugmittels Kette bzw. Zahnriemens weisen Zugmitteltriebe häufig Schwingungsdämpfer in Form von gehäusefest angeordneten Gleitschuhen auf, die vorzugsweise aus einem reibungsarmen Polymerkunststoff oder einer mit diesem Material beschichteten Führungsschiene aus Metall bestehen und mit dem Zugmittel in Gleitkontakt stehen.

Die Gleitschuhe können sowohl am Lasttrumm als auch am Leertrum des Zugmittels angeordnet sein. Zur Erhöhung des Umschlingungswinkels an den Antriebs- und Abtriebszahnrädern, insbesondere aber zum Ausgleich von einer im Betrieb auftretenden Längendehnung des Zugmittels, weisen Zugmitteltriebe zumeist auch eine an dem Leertrum angeordnete Spannvorrichtung auf, die über einen axialbeweglich gelagerten Spannkolben verfügt, der beaufschlagt von einem Federelement und/oder einem Druckmittel auf einen Spannschuh einwirkt, der das Leertrum des Zugmittels normal zu seiner Bewegungsrichtung sowie den Drehachsen der Zahnräder auslenkt und damit die Längendehnung ausgleicht und das Zugmittel spannt.

Aus der DE 40 13 190 C2 ist eine Spannvorrichtung eines Kettentriebes bekannt, bei der ein Spannschuh als separates Bauteil ausgebildet und um eine gehäusefeste Achse drehbar gelagert ist. Ein Spannkolben beaufschlagt den Spannschuh beabstandet von dieser Achse mit einer Druckkraft und drückt diesen damit gegen das Leertrum der Kette, wodurch diese gespannt wird. Aufgrund des gleitverschieblichen Kontaktes des Spannschuhs mit dem Spannkolben werden betriebsbedingte Verspannungen zwischen dem Spannkolben und dem Spannschuh, weitgehend vermieden. Diese bekannte Spannvorrichtung weist jedoch eine hohe Anzahl von Bauteilen und einen relativ großen Bauraumbedarf auf.

In der DE 195 36 643 A1 wird eine Spannvorrichtung eines Kettentriebes beschrieben, bei der zwei Spannschuhe aus einem Polymerkunststoff gegensinnig ausgerichtet starr auf einem Spannhebel befestigt sind, der als Kipphebel ausgebildet und zwischen den beiden Spannschuhen um eine gehäusefeste Achse drehbar gelagert ist. Ein Spannkolben beaufschlagt den Spannhebel beabstandet von der Achse mit einer Druckkraft und drückt damit beide Spannschuhe gegensinnig gegen das Leertrum der Kette, wodurch diese gespannt wird. Aufgrund der drehbeweglichen Lagerung des Spannhebels und des gleitverschieblichen Kontaktes des Spannhebels mit dem Spannkolben treten keine großen Verspannungen zwischen den Spannschuhen und dem Spannhebel auf. Die Anzahl der Bauteile und der Bauraumbedarf ist gegenüber der vorgenannten Ausführung jedoch nochmals erhöht.

Für den Einsatz speziell unter beengten Platzverhältnissen sind daher kompakte Spannvorrichtungen entwickelt worden, bei denen der Spannschuh weitgehend starr mit dem Spannkolben verbunden ist.

Eine erste derartig ausgebildete Spannvorrichtung ist als Bestandteil eines Nockenwellen-Kettentriebes aus der DE 40 06 910 C1 bekannt, bei der ein Spannschuh mit geringer Überkragung des Spannkolbens und somit ungünstig kleiner Kontaktfläche zu der Kette unmittelbar auf dem Befestigungsschaft- des Spannkolbens angeordnet ist.

Eine weitere derartige Spannvorrichtung ist in der DE 698 16 264 T2 insbesondere für die Anwendung in einem Kettentrieb eines Nockenwellenantriebs beschrieben, bei welcher der Spannschuh eine deutliche Überkragung zu dem Spannkolben aufweist und seitlich auf ein außen starr auf dem Spannkolben befestigtes scheibenförmiges Stützelement aufgeschoben sowie mit einer Schraubverbindung gesichert ist. Bei dieser Ausführung ist der Aufwand für die Fertigung und die Montage der Einzelteile hoch.

Zudem ist eine einfach und preiswert herstellbare Spannvorrichtung bekannt, bei der ein Spannschuh mit großer Überkragung des Spannkolbens aus einem Polymerkunststoff hergestellt, mit einer zentralen Lagerbohrung versehen, und durch ein Aufschieben auf einen zylindrischen Lagerschaft des Spannkolbens starr mit diesem verbunden ist. Bei dieser Ausführung kann es aber, insbesondere aufgrund der großen Überkragung, aufgrund von im Betrieb auftretenden, zumeist schwellenden Biegebelastungen zwischen dem Spannschuh und dem Spannkolben zu Spannungsüberhöhungen im Bereich der Lagerbohrung des Spannschuhs kommen, welches zur Überlastung und gegebenenfalls sogar zur Zerstörung des Spannschuhs führen kann.

Zur besseren Lastverteilung und Übertragung von Biegekräften von dem Spannschuh in den Spannkolben ist daher ein scheibenförmiges metallisches Übertragungselement mit einer zentralen Lagerbohrung vor dem Spannschuh auf den Lagerschaft aufgepresst und mit diesem verstemmt oder verschweißt. Hierdurch ist zwar die Kraftübertragung zwischen dem Spannschuh und dem Spannkolben verbessert, nachteilig aber der Fertigungsprozess aufwendiger gestaltet worden. Hinzu kommt, dass es beim Verstemmen oder Verschweißen des Stützelementes mit dem Spannkolben zu unerwünschten Verformungen und Verspannungen in beiden Bauteilen kommen kann.

### Aufgabe der Erfindung

Der Erfindung liegt daher die Aufgabe zugrunde, eine Spannvorrichtung eines Zugmitteltriebes der eingangs genannten Art vorzustellen, die bei einfachem und kostengünstigem Aufbau, insbesondere bei Verwendung eines den Spannkolben überkragenden Spannschuhs, eine stabilere Verbindung des Spannschuhs mit dem Spannkolben ergibt.

### Zusammenfassung der Erfindung

Der Erfindung liegt die Erkenntnis zugrunde, dass durch eine großflächige Einleitung von Belastungskräften und Biegemomenten von dem aus einem Polymerkunststoff bestehenden Spannschuh in das metallische Stützelement und der Weiterleitung des Biegemomentes in den Spannkolben im wesentlichen über das Stützelement geringere Belastungsspitzen in dem Spannschuh auftreten, und somit ohne weitere aufwendige Maßnahmen eine stabilere Einheit aus Spannkolben, Stützelement, und Spannschuh gebildet wird.

Demzufolge wird die gestellte Aufgabe durch eine Spannvorrichtung mit den Merkmalen des Oberbegriffs des Anspruchs 1 gelöst.

Dadurch, dass der Spannschuh mit dem scheibenförmigen Stützelement verbunden und das Stützelement auf den Befestigungsschaft des Spannkolbens aufgepresst ist und an dem Absatz anliegt, verteilen sich die im Betrieb auftretenden Lasten zwischen dem Spannschuh und dem Stützelement jeweils auf eine vergleichsweise große Fläche, so dass lokale Spannungsspitzen und Überlastungen in dem Polymerkunststoff des Spannschuhs, insbesondere im Bereich der Lagerbohrung des Spannschuhs, vermieden werden. Durch die Presspassung in Verbindung mit dem großflächigen Kontakt an dem Absatz zwischen dem Stützelement und dem Spannkolben können die auftretenden Lastkräfte übertragen werden.

Somit erfolgt die Einleitung der betriebsbedingten Lasten von dem Spannschuh in den Spannkolben im wesentlichen über die Presspassung der Lagerbohrung des Stützelementes mit dem Befestigungsschaft des Spannkolbens, und nur zu einem geringeren Teil über den Kontakt der Lagerbohrung des Spannschuhs mit dem Befestigungsschaft, der als Spielpassung oder auch als leichte Presspassung ausgebildet sein kann. Durch die Vormontage des Spannschuhs und des Stützelementes werden beide Bauteile in einem gemeinsamen Arbeitsschritt auf den Befestigungsschaft des Spannkolbens aufgepresst. Die Bauteile sind einfach aufgebaut und somit kostengünstig herstellbar. Auch die Montage der Bauteile ist einfach und schnell durchführbar.

Vorteilhafte Ausgestaltungen dieser erfindungsgemäßen Spannvorrichtung sind in den Unteransprüchen 2 bis 6 angegeben.

Zur Verbindung des Spannschuhs mit dem Stützelement ist das Stützelement bevorzugt mit dem Polymerkunststoff des Spannschuhs umspritzt, welches einen optimalen Kontakt zwischen dem Spannschuh und dem Stützelement ergibt sowie einfach und preiswert herstellbar ist.

In einer dazu alternativen und ebenfalls kostengünstigen Ausführungsform der Erfindung weist der Spannschuh dagegen auf der dem Spannkolben zugewandten Innenseite eine dem Stützelement angepasste untermaßige Ausnehmung auf, in die das Stützelement eingepresst ist.

In einer weiteren bevorzugten Ausführungsform weist der Spannschuh auf der dem Spannkolben zugewandten Innenseite eine dem Stützelement angepasste übermaßige Ausnehmung mit mindestens zwei an gegenüberliegenden Kanten der Ausnehmung angeordneten überstehenden Verrastungsnasen auf, in die das Stützelement eingedrückt und verrastet ist.

Ebenfalls ist es möglich, dass der Spannschuh mit einem zu der dem Spannkolben zugewandten Innenseite parallel ausgerichteten und dem Stützelement angepassten einseitig offenen Schlitz versehen ist, in den das Stützelement eingeschoben und durch das Aufschieben des Spannschuhs auf den Lagerschaft des Spannkolbens fixiert ist.

Zur Vermeidung einer Verdrehung des Spannschuhs relativ zu dem Spannkolben weisen der Befestigungsschaft des Spannkolbens und die Lagerbohrung des Stützelementes zweckmäßig jeweils ein korrespondierendes Formelement zur gegenseitigen Richtungsfixierung auf. Das Formelement des Spannkolbens kann am einfachsten als eine durch Abfräsen herstellbare einseitige Abflachung des kreisrunden Querschnitts des Befestigungsschaftes, und das Formelement des Stützelementes als eine korrespondierende, durch Ausstanzen mit entsprechenden Matrizen herstellbare einseitige Abflachung der kreisrunden Lagerbohrung in Form einer Sekante ausgebildet sein.

Zur Verstärkung der Verklemmung auf dem Lagerschaft des Spannkolbens kann die Lagerbohrung des Stützelementes auch zweckmäßig eine Verengung aufweisen, die beispielsweise durch eine nach innen gerichtete Abweichung von dem kreisrunden Bohrungsrand gebildet sein kann. In dieser Hinsicht vorteilhaft erscheint eine Ausbildung der Lagerbohrung des Stützelementes in Form einer Gestaltung des Bohrungsrands als Sekanten-Polygonzug, z.B. als Sechskant-Polygonzug, wozu geeignete Stanzwerkzeuge preiswert erhältlich sind. Die Verstärkung der Verklemmung des Stützelementes auf dem Lagerschaft wird dabei durch eine teilweise plastische Verformung des Bohrungsrands des Stützelementes im Bereich der Verengungen bewirkt.

### Kurze Beschreibung der Zeichnungen

Die Erfindung wird im Folgenden beispielhaft anhand der beilegenden Zeichnung näher erläutert. Darin zeigen
- Fig. 1a: eine erste Ausführungsform einer erfindungsgemäßen Spannvorrichtung in einem Seitenschnitt IA - IA,
- Fig. 1b: die Spannvorrichtung gemäß Fig. 1a in einem Querschnitt IB - IB,
- Fig. 2a: eine zweite Ausführungsform einer Spannvorrichtung in einem Seitenschnitt IIA - IIA,
- Fig. 2b: die Spannvorrichtung gemäß Fig. 2a in einem Querschnitt IIB - IIB,
- Fig. 3a: eine dritte Ausführungsform einer Spannvorrichtung in einem Seitenschnitt IIIA - IIIA,
- Fig. 3b: die Spannvorrichtung gemäß Fig. 3a in einem Querschnitt IIIB - IIIB,
- Fig. 4a: eine vierte Ausführungsform einer Spannvorrichtung in einem Seitenschnitt IVA - IVA,
- Fig. 4b: die Spannvorrichtung gemäß Fig. 4a in einem Querschnitt IVB - IVB,
- Fig. 5a: eine erste Ausführungsform einer bekannten Spannvorrichtung in einem Seitenschnitt VA - VA,
- Fig. 5b: die bekannten Spannvorrichtung gemäß Fig. 5a in einem Querschnitt VB - VB,
- Fig. 6a: eine zweite Ausführungsform einer bekannten Spannvorrichtung in einem Seitenschnitt VIA - VIA,
- Fig. 6b: die bekannten Spannvorrichtung gemäß Fig. 6a in einem Querschnitt VIB - VIB,
- Fig. 7a: eine erste Weiterbildung der erfindungsgemäßen Spannvorrichtung in einer Draufsicht des Stützelementes,
- Fig. 7b: die erste Weiterbildung gemäß Fig. 7a in einer Draufsicht des Spannkolbens,
- Fig. 8a: eine zweite Weiterbildung der erfindungsgemäßen Spannvorrichtung in einer Draufsicht des Stützelementes, und
- Fig. 8b: die zweite Weiterbildung gemäß Fig. 8a in einer Draufsicht des Spannkolbens.

### Detaillierte Beschreibung der Zeichnungen

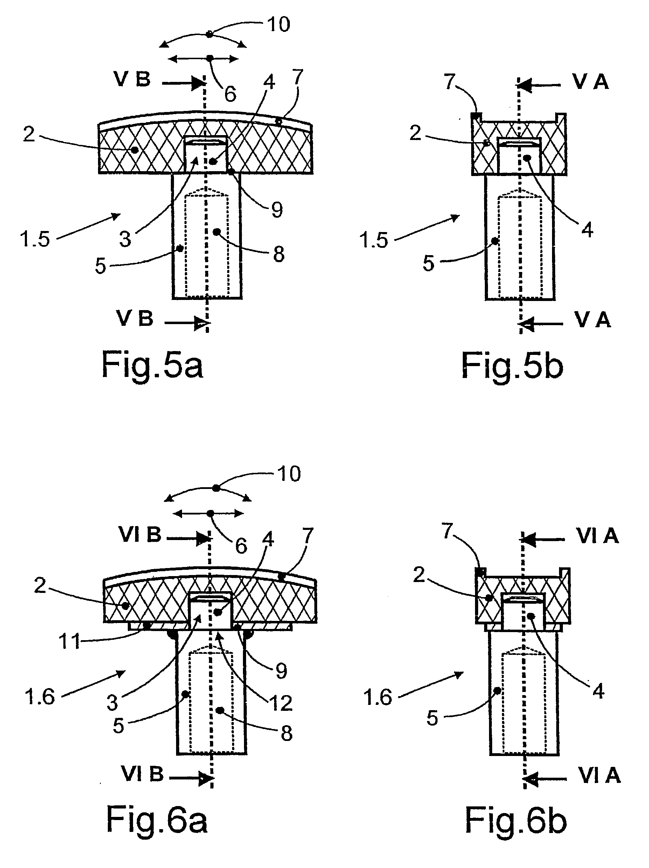

Bevor auf die konkreten Beispiele von erfindungsgemäß ausgebildeten Spannvorrichtungen eingegangen wird, sollen zwei bekannte gattungsgemäße Spannvorrichtungen mit Hilfe der Figuren 5a bis 6b genauer beschrieben werden.

In einer ersten Ausführungsform einer bekannten Spannvorrichtung 1.5 gemäß den Figuren 5a und 5b ist ein aus einem Polymerkunststoff bestehender Spannschuh 2 mit einer zentralen Lagerbohrung 3 unmittelbar auf den zylindrischen Befestigungsschaft 4 eines Spannkolbens 5 aufgepresst. Der Spannschuh 2 überkragt den Spannkolben 5 in der Bewegungsrichtung 6 des nicht abgebildeten Zugmittels und weist seitlich jeweils einen Führungssteg 7 zur seitlichen Führung des Zugmittels auf. Durch den kleineren Durchmesser des Befestigungsschaftes 4 gegenüber dem Hauptteil 8 des Spannkolbens 5 wird ein Absatz 9 gebildet, der als Anschlag für den Spannschuh 2 dient. Durch betriebsbedingt auftretende Biegemomente 10 tritt eine ungünstig hohe Belastung des Spannschuhs 2 im Bereich der Lagerbohrung 3 auf, die zur Lockerung der Verbindung zwischen dem Spannschuh 2 und dem Spannkolben 5 sowie gegebenenfalls auch zur Zerstörung des Spannschuhs 2 führen kann.

In einer zweiten Ausführungsform einer bekannten Spannvorrichtung 1.6 gemäß den Figuren 6a und 6b ist bei im wesentlichen gleichem Aufbau wie zuvor zunächst ein scheibenförmiges Stützelement 11 aus Stahl mit einer zentralen Lagerbohrung 12 bis zum Absatz 9 auf den Befestigungsschaft 4 des Spannkolbens 5 aufgeschoben und mit dem Hauptteil 8 des Spannkolbens 5 verschweißt. Nachfolgend ist der Spannschuh 2 mit seiner zentralen Lagerbohrung 3 bis zum Anschlag an dem Stützelement 11 auf den Befestigungsschaft 4 des Spannkolbens 5 aufgepresst. Durch das Stützelement 11 ist die Kraftübertragung von dem Spannschuh 2 in den Spannkolben 5 verbessert. Insbesondere werden auftretende Biegemomente 10 von dem Stützelement 11 aufgefangen und in den Spannkolben 5 eingeleitet, so dass die Belastung in der Lagerbohrung 3 des Spannschuhs 2 deutlich geringer ausfällt. Nachteilig ist jedoch der erhöhte Arbeitsaufwand bei der Montage der Bauteile und gegebenenfalls durch das Verschweißen auftretende Verformungen und Verspannungen des Stützelementes 11 und des Spannkolbens 5.

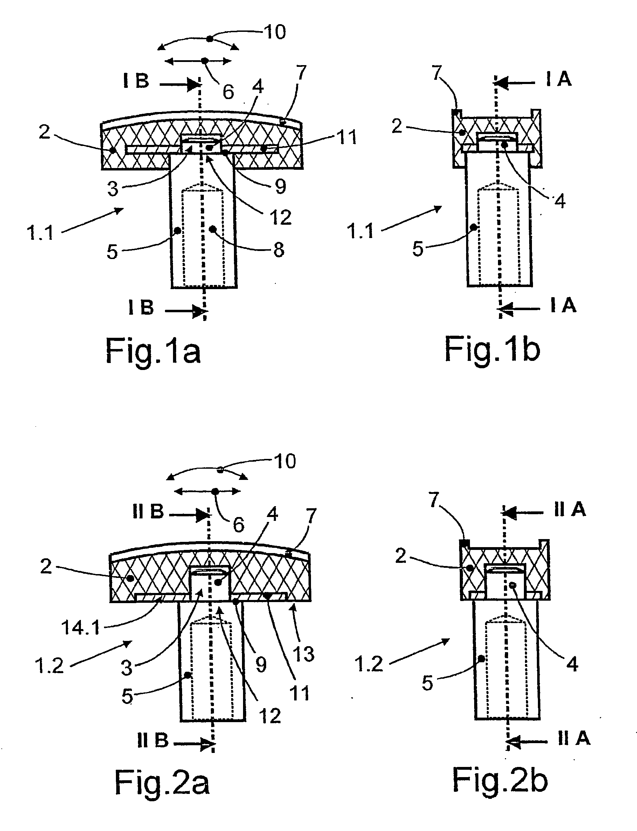

In einer ersten Ausführungsform der erfindungsgemäßen Spannvorrichtung 1.1 gemäß den Figuren 1a und 1b ist das Stützelement 11 mit dem Polymerkunststoff des Spannschuhs 2 umspritzt. Die dadurch gebildete Einheit aus dem Spannschuh 2 und dem Stützelement 11 ist mit deren Lagerbohrungen 3, 12 bis zum Anschlag des Stützelementes 11 an dem Absatz 9 auf den Befestigungsschaft 4 des Spannkolbens 5 aufgepresst. Dabei bildet die Paarung der Lagerbohrung 12 des Stützelementes 11 mit dem Befestigungsschaft 4 des Spannkolbens 5 eine feste Presspassung, so dass die Kraftübertragung zwischen dem Spannschuh 2 und dem Spannkolben 5 im Wesentlichen über das Stützelement 11 erfolgt. Dagegen ist die Paarung der Lagerbohrung 3 des Spannschuhs 2 mit dem Befestigungsschaft 4 des Spannkolbens 5 als Spielpassung oder als leichte Presspassung ausgebildet. Durch diese Ausbildung der Spannvorrichtung ist die Kraftübertragung von dem Spannschuh 2 in den Spannkolben 5, insbesondere die Einleitung von Biegemomenten 10 von dem Spannschuh 2 in den Spannkolben 5, bei einfachem und kostengünstigem Aufbau deutlich verbessert.

In einer zweiten Ausführung der erfindungsgemäßen Spannvorrichtung 1.2 gemäß den Figuren 2a und 2b weist der Spannschuh 2 auf seiner dem Spannkolben 5 zugewandten Innenseite 13 eine dem Stützelement 11 angepasste untermaßige Ausnehmung 14.1 auf, in die das Stützelement 11 eingepresst ist.

Die durch die Vormontage des Stützelementes 11 in dem Spannschuh 2 gebildete Einheit ist bis zum Anschlag des Stützelementes 11 an dem Absatz 9 auf den Befestigungsschaft 4 des Spannkolbens 5 aufgepresst, wobei die Paarung der Lagerbohrung 12 des Stützelementes 11 mit dem Befestigungsschaft 4 des Spannkolbens 5 wiederum eine feste Presspassung bildet. Somit ist auch bei dieser Ausführung die Kraftübertragung von dem Spannschuh 2 in den Spannkolben 5 bei einfachem und kostengünstigem Aufbau sehr günstig gestaltet.

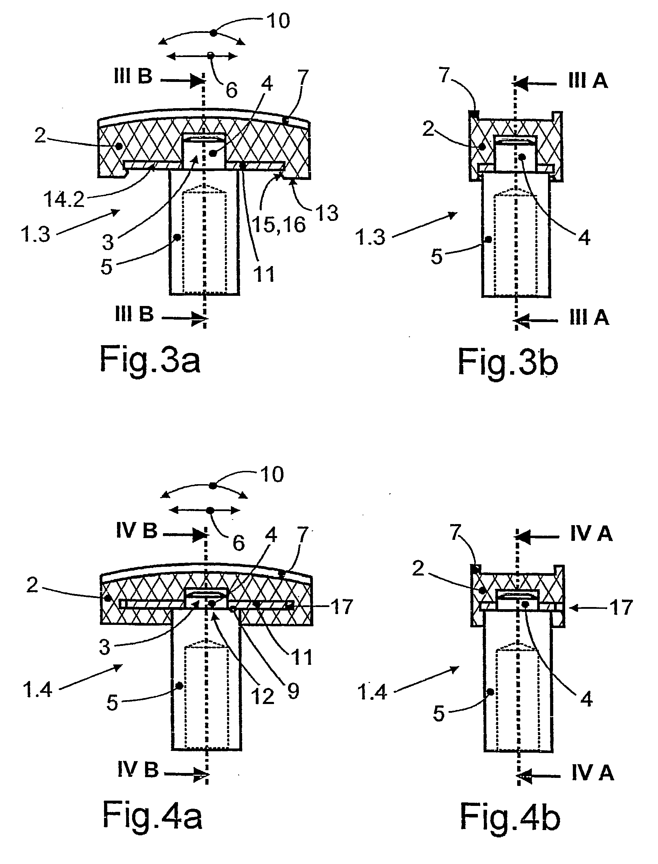

In einer dritten Ausführungsform der erfindungsgemäßen Spannvorrichtung 1.3 gemäß den Figuren 3a und 3b weist der Spannschuh 2 auf der dem Spannkolben 5 zugewandten Innenseite 13 eine dem Stützelement 11 angepasste übermaßige Ausnehmung 14.2 auf, die mit mindestens zwei an gegenüberliegenden Kanten 15 der Ausnehmung 14.2 angeordneten überstehenden Verrastungsnasen 16 versehen ist. Das Stützelement 11 ist in die Ausnehmung 14.2 eingedrückt und hinter den Verrastungsnasen 16 verrastet. Die durch die Vormontage des Stützelementes 11 in dem Spannschuh 2 gebildete Einheit ist bis zum Anschlag des Stützelementes 11 an den Absatz 9 auf den Befestigungsschaft 4 des Spannkolbens 5 aufgepresst, wobei die Paarung der Lagerbohrung 12 des Stützelementes 11 mit dem Befestigungsschaft 4 des Spannkolbens 5 wiederum eine feste Presspassung bildet. Dadurch ist auch bei dieser Ausführung die Kraftübertragung von dem Spannschuh 2 in den Spannkolben 5 bei einfachem und kostengünstigem Aufbau optimal.

In einer vierten Ausführungsform der erfindungsgemäßen Spannvorrichtung 1.4 gemäß den Figuren 4a und 4b ist der Spannschuh 2 mit einem zu der dem Spannkolben 5 zugewandten Innenseite 13 parallel ausgerichteten, dem Stützelement 11 angepassten und einseitig offenen Schlitz 17 versehen. Das Stützelement 11 ist seitlich in den Schlitz 17 eingeschoben und durch das Aufpressen der aus dem Spannschuh 2 und dem Stützelement 11 gebildeten Einheit auf den Lagerschaft 4 des Spannkolbens 5 fixiert. Der Spannschuh 5 ist bis zum Anschlag des Stützelementes 11 an den Absatz 9 auf den Befestigungsschaft 4 des Spannkolbens 5 aufgepresst, und die Paarung der Lagerbohrung 12 des Stützelementes 11 mit dem Befestigungsschaft 4 des Spannkolbens 5 bildet eine feste Presspassung. Somit ist auch in diesem Fall eine günstige Kraftübertragung von dem Spannschuh 2 in den Spannkolben 5 in Verbindung mit einem einfachen und kostengünstigen Aufbau realisiert.

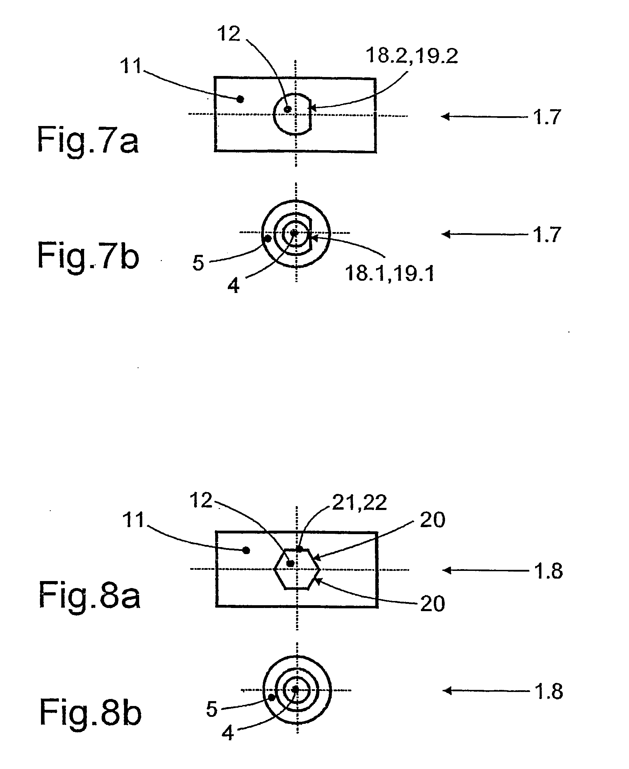

In einer ersten Weiterbildung der erfindungsgemäßen Spannvorrichtung 1.7 gemäß den Figuren 7a und 7b weisen der Befestigungsschaft 4 des Spannkolbens 5 und die Lagerbohrung 12 des Stützelementes 11 jeweils zueinander geometrisch korrespondierende Formelemente 18.1 bzw. 18.2 zur gegenseitigen Richtungsfixierung auf. Das Formelement 18.1 des Spannkolbens 5 ist als eine einseitige Abflachung 19.1 des kreisrunden Querschnitts des Befestigungsschaftes 4, und das Formelement 18.2 des Stützelementes 11 als eine korrespondierende einseitige Abflachung 19.2 der kreisrunden Lagerbohrung 12 in Form einer Sekante ausgebildet.

In einer zweiten Weiterbildung der erfindungsgemäßen Spannvorrichtung 1.8 gemäß den Figuren 8a und 8b weist die Lagerbohrung 12 des Stützelementes 11 Verengungen 20 auf, die vorliegend durch eine Ausbildung des Bohrungsrands 21 der Lagerbohrung 12 in Form eines sechskantigen Sekanten-Polygonzuges 22 gebildet werden. Die dadurch bewirkte teilweise plastische Verformung des Bohrungsrands 21 beim Aufpressen der aus dem Spannschuh 2 und dem Stützelement 11 gebildeten Einheit auf den Befestigungsschaft 4 des Spannkolbens 5 bewirkt eine Verstärkung der Verklemmung des Stützelementes 11 auf dem Lagerschaft 4. Dadurch ist die Verbindung aus Spannschuh 2, Stützelement 11 und Spannkolben 5 insgesamt stabiler und stärker belastbar.

### Bezugszeichenliste

- 1.1: Spannvorrichtung
- 1.2: Spannvorrichtung
- 1.3: Spannvorrichtung
- 1.4: Spannvorrichtung
- 1.5: Spannvorrichtung (Stand der Technik)
- 1.6: Spannvorrichtung (Stand der Technik)
- 1.7: Spannvorrichtung
- 1.8: Spannvorrichtung
- 2: Spannschuh
- 3: Lagerbohrung
- 4: Befestigungsschaft
- 5: Spannkolben
- 6: Bewegungsrichtung
- 7: Führungssteg
- 8: Hauptteil
- 9: Absatz
- 10: Biegemoment
- 11: Stützelement
- 12: Lagerbohrung
- 13: Innenseite
- 14.1: Ausnehmung
- 14.2: Ausnehmung
- 15: Kante
- 16: Verrastungsnase
- 17: Schlitz
- 18.1: Formelement
- 18.2: Formelement
- 19.1: Abflachung
- 19.2: Abflachung
- 20: Verengung
- 21: Bohrungsrand
- 22: Sekanten-Polygonzug

## Patentansprüche

1. Spannvorrichtung eines Zugmitteltriebes, mit einem axialbeweglich gelagerten Spannkolben (5), der mit einem dem Zugmittel zugewandten Befestigungsschaft (4) versehen ist, mit einem mit einer Lagerbohrung (12) auf dem Befestigungsschaft (4) befestigten metallischen Stützelement (11), und mit einem von dem Stützelement (11) getragenen Spannschuh (2) aus einem Polymerkunststoff, wobei das Stützelement (11) an dem Spannschuh (2) vormontiert ist, und bei dem das Stützelement (11) im vormontiert Zustand über eine Presspassung zwischen seiner Lagerbohrung (12) und dem Befestigungsschaft (4) mit dem Spannkolben (5) verbunden ist sowie an einem Absatz (9) des Spannkolbens (5) anliegt, **dadurch gekennzeichnet, dass** der Spannschuh (2) auf seiner dem Spannkolben (5) zugewandten Innenseite (13) eine dem Stützelement (11) angepasste untermaßige Ausnehmung (14.1) aufweist, in die das Stützelement (11) eingepresst ist.

2. Spannvorrichtung nach Anspruch 1, **dadurch gekennzeichnet, dass** der Befestigungsschaft (4) des Spannkolbens (5) und die Lagerbohrung (12) des Stützelementes (11) jeweils ein korrespondierendes Formelement (18.1, 18.2) zur gegenseitigen Richtungsfixierung aufweisen.

3. Spannvorrichtung nach Anspruch 1 oder 2, **dadurch gekennzeichnet, dass** das Formelement (18.1) des Spannkolbens (5) als eine einseitige Abflachung (19.1) des kreisrunden Querschnitts des Befestigungsschaftes (4) und das Formelement (18.2) des Stützelementes (11) als eine korrespondierende einseitige Abflachung (19.2) der kreisrunden Lagerbohrung (12) in Form einer Sekante ausgebildet ist.

4. Spannvorrichtung nach einem der Ansprüche 1 bis 3, **dadurch gekennzeichnet, dass** die Lagerbohrung (12) des Stützelementes (11) zur Verstärkung der Verklemmung auf dem Befestigungsschaft (4) des Spannkolbens (5) eine Verengung (20) aufweist.

5. Spannvorrichtung nach Anspruch 4, **dadurch gekennzeichnet, dass** die Verengung (20) der Lagerbohrung (12) des Stützelementes (11) durch eine nach innen gerichtete Abweichung von dem kreisrunden Bohrungsrand (21) gebildet ist.

6. Spannvorrichtung nach Anspruch 4 oder 5, **dadurch gekennzeichnet, dass** die Verengung (20) der Lagerbohrung (12) des Stützelementes (11) durch eine Ausbildung des Bohrungsrands (21) als Sekanten-Polygonzug (22) gebildet ist.

## Claims

1. Tensioning device of a traction drive, with an axially movably mounted tensioning piston (5) which is provided with a fastening shank (4) facing the traction means, with a metallic supporting element (11) fastened on the fastening shank (4) by means of a bearing bore (12), and with a tensioning shoe (2) carried by the supporting element (11) and consisting of a polymer plastic, the supporting element (11) being premounted on the tensioning shoe (2), and, in the premounted state, the supporting element (11) being connected via a press fit, between its bearing bore (12) and the fastening shank (4), to the tensioning piston (5) and bearing against a step (9) of the tensioning piston (5), **characterized in that** the tensioning shoe (2) has, on its inside (13) facing the tensioning piston (5), an undersized recess (14.1) which is adapted to the supporting element (11) and into which the supporting element (11) is pressed.

2. Tensioning device according to Claim 1, **characterized in that** the fastening shank (4) of the tensioning piston (5) and the bearing bore (12) of the supporting element (11) have in each case a matching form element (18.1, 18.2) for mutual direction fixing.

3. Tensioning device according to Claim 1 or 2, **characterized in that** the form element (18.1) of the tensioning piston (5) is designed as a one-sided flattening (19.1) of the circular cross section of the fastening shank (4), and the form element (18.2) of the supporting element (11) is designed as a matching one-sided flattening (19.2) of the circular bearing bore (12) in the form of a secant.

4. Tensioning device according to one of Claims 1 to 3, **characterized in that** the bearing bore (12) of the supporting element (11) has a contraction (20) for the reinforcement of the clamping on the fastening shank (4) of the tensioning piston (5).

5. Tensioning device according to Claim 4, **characterized in that** the contraction (20) of the bearing bore (12) of the supporting element (11) is formed by an inwardly directed deviation from the circular bore margin (21).

6. Tensioning device according to Claim 4 or 5, **characterized in that** the contraction (20) of the bearing bore (12) of the supporting element (11) is formed by a design of the bore margin (21) as a secant polygonal line (22).

## Revendications

1. Dispositif tendeur pour un entraînement à moyen de traction, avec un piston tendeur (5) monté de manière mobile axialement, qui est pourvu d'une tige de fixation (4) tournée vers le moyen de traction, avec un élément de support (11) métallique fixé avec un alésage de palier (12) sur la tige de fixation (4), et avec un sabot tendeur (2) en plastique polymère porté par l'élément de support (11), l'élément de support (11) étant prémonté sur le sabot tendeur (2), et dans lequel l'élément de support (11) dans l'état prémonté est connecté par le biais d'un ajustement serré entre son alésage de palier (12) et la tige de fixation (4) au piston tendeur (5), et s'applique également contre un épaulement (9) du piston tendeur (5), **caractérisé en ce que** le sabot tendeur (2) présente, sur son côté interne (13) tourné vers le piston tendeur (5), un évidement (14.1) sous-dimensionné adapté à l'élément de support (11), dans lequel l'élément de support (11) est pressé.

2. Dispositif tendeur selon la revendication 1, **caractérisé en ce que** la tige de fixation (4) du piston tendeur (5) et l'alésage de palier (12) de l'élément de support (11) présentent à chaque fois un élément de formage correspondant (18.1, 18.2) pour la fixation de direction mutuelle.

3. Dispositif tendeur selon la revendication 1 ou 2, **caractérisé en ce que** l'élément de formage (18.1) du piston tendeur (5) est réalisé sous la forme d'un méplat unilatéral (19.1) de la section transversale ronde circulaire de la tige de fixation (4), et l'élément de formage (18.2) de l'élément de support (11) est réalisé sous la forme d'un méplat correspondant unilatéral (19.2) de l'alésage de palier rond circulaire (12) en forme de sécante.

4. Dispositif tendeur selon l'une quelconque des revendications 1 à 3, **caractérisé en ce que** l'alésage de palier (12) de l'élément de support (11) pour le renforcement du serrage sur la tige de fixation (4) du piston tendeur (5), présente un rétrécissement (20).

5. Dispositif tendeur selon la revendication 4, **caractérisé en ce que** le rétrécissement (20) de l'alésage de palier (12) de l'élément de support (11) est formé par un écart, orienté vers l'intérieur, du bord d'alésage (21) rond circulaire.

6. Dispositif tendeur selon la revendication 4 ou 5, **caractérisé en ce que** le rétrécissement (20) de l'alésage de palier (12) de l'élément de support (11) est formé par une réalisation du bord d'alésage (21) sous forme de câble polygonal sécant (22).
